(19) Europäisches Patentamt / European Patent Office / Office européen des brevets

(11) **EP 4 075 126 B1**

(12) **EUROPEAN PATENT SPECIFICATION**

(45) Date of publication and mention
of the grant of the patent:
**09.04.2025 Bulletin 2025/15**

(21) Application number: **21168468.3**

(22) Date of filing: **14.04.2021**

(51) International Patent Classification (IPC):
*G01N 23/2251* (2018.01) *H01J 37/26* (2006.01)

(52) Cooperative Patent Classification (CPC):
**G01N 23/2251; H01J 2237/223; H01J 2237/2614**

(54) **PHASE RETRIEVAL IN ELECTRON MICROSCOPY**

GEWINNUNG VON PHASENINFORMATIONEN IN DER ELEKTRONENMIKROSKOPIE

EXTRACTION DE PHASE EN MICROSCOPIE ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.10.2022 Bulletin 2022/42**

(73) Proprietor: **Universiteit Antwerpen
2000 Antwerpen (BE)**

(72) Inventors:
• **Friedrich, Thomas
2000 Antwerpen (BE)**
• **Yu, Chu-Ping
2018 Antwerpen (BE)**
• **Van Aert, Sandra
2000 Antwerpen (BE)**
• **Verbeeck, Jo
2000 Antwerpen (BE)**

(74) Representative: **Jacobs, Tinneke Ivonne C
Bureau M.F.J. Bockstael N.V.
Tavernierkaai 2
2000 Antwerpen (BE)**

(56) References cited:
**US-A1- 2020 003 709**

• CAO MICHAEL ET AL: "Machine Learning for Phase Retrieval from 4D-STEM Data", MICROSCOPY AND MICROANALYSIS, vol. 26, no. S2, 28 July 2020 (2020-07-28), pages 8 - 9, XP055838664, ISSN: 1431-9276, Retrieved from the Internet <URL:https://www.cambridge.org/core/services/aop-cambridge-core/content/view/EC4EA9D0EAD92867BC8109AB734F2304/S1431927620013094a.pdf/machine-learning-for-phase-retrieval-from-4d-stem-data.pdf> DOI: 10.1017/S1431927620013094
• WEIZONG XU ET AL: "A Deep Convolutional Neural Network to Analyze Position Averaged Convergent Beam Electron Diffraction Patterns", ARXIV.ORG, CORNELL UNIVERSITY LIBRARY, 201 OLIN LIBRARY CORNELL UNIVERSITY ITHACA, NY 14853, 3 August 2017 (2017-08-03), XP081290294, DOI: 10.1016/J.ULTRAMIC.2018.03.004
• ZHANG CHENYU ET AL: "Atomic resolution convergent beam electron diffraction analysis using convolutional neural networks", ULTRAMICROSCOPY, ELSEVIER, AMSTERDAM, NL, vol. 210, 23 December 2019 (2019-12-23), XP086092272, ISSN: 0304-3991, [retrieved on 20191223], DOI: 10.1016/J.ULTRAMIC.2019.112921
• OXLEY MARK P ET AL: "The importance of temporal and spatial incoherence in quantitative interpretation of 4D-STEM", ULTRAMICROSCOPY, ELSEVIER, AMSTERDAM, NL, vol. 215, 6 May 2020 (2020-05-06), XP086202708, ISSN: 0304-3991, [retrieved on 20200506], DOI: 10.1016/J.ULTRAMIC.2020.113015

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- OPHUS COLIN: "Abstract", MICROSCOPY AND MICROANALYSIS, vol. 25, no. 3, 14 May 2019 (2019-05-14), pages 563 - 582, XP055838701, ISSN: 1431-9276, Retrieved from the Internet <URL:https://www.cambridge.org/core/services/aop-cambridge-core/content/view/A7E922A2C5BFD7FD3F208C537B872B7A/S1431927619000497a.pdf/four-dimensional-scanning-transmission-electron-microscopy-4d-stem-from-scanning-nanodiffraction-to-ptychography-and-beyond.pdf> DOI: 10.1017/S1431927619000497
- SAVITZKY BENJAMIN H. ET AL: "Abstract", MICROSCOPY AND MICROANALYSIS, vol. 27, no. 4, 20 March 2020 (2020-03-20), pages 712 - 743, XP055838631, ISSN: 1431-9276, Retrieved from the Internet <URL:https://arxiv.org/pdf/2003.09523.pdf> DOI: 10.1017/S1431927621000477
- JIANG YI ET AL: "Electron ptychography of 2D materials to deep sub-ångström resolution", NATURE, MACMILLAN JOURNALS LTD., ETC, LONDON, vol. 559, no. 7714, 18 July 2018 (2018-07-18), pages 343 - 349, XP036544230, ISSN: 0028-0836, [retrieved on 20180718], DOI: 10.1038/S41586-018-0298-5
- TATE MARK W ET AL: "High Dynamic Range Pixel Array Detector for Scanning Transmission Electron Microscopy", MICROSCOPY AND MICROANALYSIS, 11 January 2016 (2016-01-11), New York, USA, pages 237 - 249, XP055839125, Retrieved from the Internet <URL:https://www.cambridge.org/core/journals/microscopy-and-microanalysis/article/high-dynamic-range-pixel-array-detector-for-scanning-transmission-electron-microscopy/17F33FF3721141C496EEC402F6D962E7> [retrieved on 20210908], DOI: 10.1017/S1431927615015664

## Description

### Technical field

The present invention relates to the field of electron microscopy, and, more specifically, the invention relates to a method and device for retrieving waveform information of an object under study from electron diffraction data collected over a beam position scanning grid.

### Technical background

Transmission electron microscopy (TEM), and particularly scanning transmission electron microscopy (STEM), has enabled the study of materials and samples at extremely high resolutions, e.g. up to the atomic scale. In this field, many different techniques are currently known, with various associated advantages and areas of applicability. Advances in the field, e.g. improvements in image quality and qualitative and quantitative performance, have shown a strong link to technological advancements in the areas of both electron optics and detector design.

Conventional detectors, such as bright field (BF), annular bright field (ABF) or annular dark field (ADF) detectors, are typically configured to cover certain angular regions in reciprocal space and collect electrons scattered in corresponding scattering angles after their interaction with the specimen. By scanning the probe over the specimen, the detector records a single integrated value for every position on the scan grid, which results in a two-dimensional (2D) map of intensity values. This map can then be used to deduce the positions, and potentially also the type, of individual atoms, or e.g. atom columns in projection, in the sample (and/or medium scale information, e.g. for the study of biological samples).

However, the ability to quickly record a full, high-quality diffraction pattern, e.g. using a direct electron detector, has opened an avenue to further advances and improvement in the field. In a STEM experiment, a full 2D diffraction pattern (in reciprocal space) can be collected for each scan point, thus repeating the acquisition over a two-dimensional raster array pattern of different beam positions, i.e. forming a four-dimensional (4D) dataset. Amplitude and phase information can be obtained by processing of the raster dataset, and this amplitude and phase data can then be further processed to reconstruct an image (or different image modalities) of the observed object.

The amount of data thus collected, which can grow rapidly due to the high dimensionality, can provide a wealth of information, a high resolution can be achieved, and a lower electron dose can potentially be used to image beam sensitive samples than would be required for more traditional detector setups. However, this technique also poses new challenges in processing, e.g. to efficiently extract the relevant information and to construct easily interpretable 2D images.

Examples of prior-art processing methods for this type of data include center-of-mass and integrated-center-of-mass imaging, as well as ptychographical methods. The methods referred to as ptychography are among the most popular methods in electron microscopy. One of the most important criteria for ptychography reconstruction is the level of overlap between beam positions, connecting the partially retrieved object at one scan position with neighboring convergent beam electron diffraction (CBED) images (collected at neighboring beam positions), such that an iterative process can eventually converge, i.e. because the retrieved result from all scan positions will eventually synchronize in their overlaps.

The computational cost of such approaches can, however, be quite high, some information that is inherently present in the collected diffraction patterns could be lost, and noise may be amplified, particularly in low-dose experiments. Furthermore, the applicability of such prior-art methods may be constrained by underlying model assumptions.

Methods as known in the art are typically based on an iterative process and/or require a complete dataset before processing, i.e. require the collection of all diffraction patterns over the raster to be finished. The latter is clearly disadvantageous when a fast, or even substantially real-time, reconstruction is desirable.

The retrieval of phase information from measured intensities is a well-known inverse problem, which poses typical challenges. Deep learning approaches are known in the field to overcome at least some of these challenges. Examples include Ede et al, "Exit Wavefunction Reconstruction from Single Transmission Electron Micrographs with Deep Learning," available in pre-print via reference arXiv:2001.10938v2, and, for solving a similar problem, Laanait et al., "Exascale deep learning for scientific inverse problems," available via arXiv:1909.11150v1 (both retrievable at https://arxiv.org).

However, 4D STEM data is troubled by relatively noisy input data, such that the observed intensity values cannot be assumed to be exactly determined by the underlying exit wave. Hence, the inverse problem to obtain the phase is further complicated by a need for methods to reduce the influence of noise and to accurately estimate the actual wave amplitude from sparse intensity patterns.

In Coa Michael et al, "Machine Learning for Phase Retrieval from 4D-STEM Data" Microscopy and Microanalysis, vol 26, no. S2, 1 August 2020, pages 8-9, XP055838664, ISSN: 1431-9276, DOI:10.1017/S1431927620013094 a method is described using a neural network, with as input a cluster of diffraction patterns and as output a pixel intensity of the real-space scanning position where the cluster is centered.

## Summary

It is an object of embodiments of the present invention to provide a good and efficient phase reconstruction of (4D) electron diffraction data.

It is an advantage of embodiments of the present invention that a reconstruction of phase information can be performed, or at least started, on a partial diffraction data set, e.g. requiring only a small fraction of the complete dataset intended to be collected before the phase and/or amplitude reconstruction process, and potentially further object image reconstruction steps, can start. In other words, it is an advantage of embodiments that a user can start reconstruction while the image data is still being collected.

It is a further advantage that the total time required for processing data can be reduced, since the reconstruction process can be executed, at least for a significant portion of the time, in parallel with the diffraction image acquisition.

It is also an advantage of embodiments of the present invention that problems in the data collection process can be detected early on, e.g. based on a partial reconstruction, such that these issues can be resolved swiftly, and possibly can even avoid wasting more resources, and/or sample material, than would be the case in an approach as known in the art, i.e. if such information about the quality of the process only becomes available after the completed acquisition.

Even if a suboptimal setting would not have severe consequences, e.g. would be problematic as referred to hereinabove, it is possible, in use of embodiments of the present invention, to optimize acquisition parameters, e.g. microscope settings, during the diffraction data collection by using near real-time feedback from a partial reconstruction, e.g. to obtain better results. For example, an operator may be enabled to monitor a substantially real-time two-dimensional representation of the object under study during the data acquisition.

It is an advantage of embodiments of the present invention that a short processing time can be achieved, and that smaller (sub)sets of data can be processed and easily (re)combined, thus, for example, reducing memory requirements and computational complexity implied by processing high-dimensional data. For example, the disclosed approach does not require to handle the entire acquisition dataset (simultaneously) in memory and/or to perform repetitive read-write operations. Thus, a good computational efficiency can be achieved and common hardware limitations in handling large datasets can be avoided.

It is an advantage of embodiments that a high-quality reconstruction can be achieved, e.g. on par with prior-art phase reconstruction algorithms. Embodiments may outperform conventional integrated-intensity-based imaging modes with regard to delivering intuitively interpretable images.

It is an advantage of embodiments that a high performance and/or reconstruction quality can be achieved in (but not limited to) the low-dose range, e.g. achieving strong noise suppression, a good contrast, a good spatial resolution, and/or a high sensitivity to different atom types. This approach also, advantageously, allows for the simultaneous visualization of light and heavy elements and makes different atomic species clearly distinguishable.

It is an advantage of embodiments that a model can be used to obtain atom-scale information, but that embodiments of the present invention can also be used, e.g. possibly when the model is trained differently or more extensively, to obtain a good performance in retrieving medium-scale information, e.g. in the study of biological samples, e.g. without necessarily requiring that image reconstruction resolution reaches the atomic scale. Particularly, a good contrast may be achievable (e.g. even for a relatively low dose) even if the resolution does not reach the atomic scale.

It is an advantage of embodiments that the low demands on computational resources, such as processing power and/or memory, due to the local nature of the applied approach, can lead to fast execution and enables substantial (near) real-time reconstruction and monitoring of the image acquisition. It is also an advantage that a model, e.g. a neural network, can be used that can be executed efficiently using parallel processing technologies, such as provided by a GPU, a cell processor or a GPGPU.

It is an advantage of embodiments of the present invention that loss of information in transitioning from a high dimensional (4D) input dataset to an easily interpretable object (2D) image can be low, e.g. reduced relative to a prior art approach.

It is an advantage of embodiments of the present invention that noise can be kept advantageously low in the constructed phase data and/or reconstructed images, e.g. that noise is not, or relatively little, amplified by the phase retrieval process.

It is an advantage of embodiments of the present invention that embodiments of the present invention may be suitable for low-dose experiments, e.g. avoiding or reducing potential beam damage to sensitive samples.

It is an advantage of embodiments of the present invention that embodiments can be easily implemented in, or applied to, a prior-art electron microscope, e.g. a scanning (transmission) electron microscope, comprising a suitable electron detector, e.g. a direct electron detector or other suitable, preferably high-performance, camera or detector array, and/or implemented in an independent software package. It is also an advantage that an approach in accordance with embodiments, e.g. implemented in a standalone software, can be applied to previously collected datasets, e.g. without requiring an acquisition protocol that is specifically adapted to be compatible with embodiments of the present invention.

It is an advantage of embodiments of the present invention that embodiments can be used to study crystalline structures, and/or can easily be applied to other types of samples, e.g. by training the machine learning process to another specific type or types of sample, such as amorphous materials and/or biological samples.

It is an advantage of embodiments of the present invention that phase and amplitude information can be efficiently and accurately deduced from 4D electron diffraction data by a single deep learning model, thus leveraging the fact that both types of information are implicitly contained in the same set of adjacent diffraction patterns. Not only is an efficiency gain achievable by combining two different estimation problems into a single integrated approach, but consistency of the determined phase and amplitude outputs might improve by not relying on separate models for estimation and/or additional steps for noise compensation.

It is an advantage of embodiments of the present invention that the presented approach does not rely on an iterative algorithm, e.g. a numerical optimization, such that further challenges, e.g. determining a suitable number of iterations, slow convergence, and/or defining suitable stopping criteria can be avoided. Furthermore, this also implies that the approach could be highly reproducible, more robust and/or less sensitive to small perturbations of input values, e.g. due to noise.

Even though a method in accordance with embodiments could be conceived as being iterative, in the sense that it can be applied to a plurality of subsets of data, each considering a group of diffraction patterns collected at neighboring beam positions, thus iterating over different beam positions (e.g. central positions of said group), it will be understood that this is not considered to be an iterative algorithm in the sense that an optimization is performed to update an estimate to optimize a target objective function or similar approach in which the number of iterations is not clearly defined by the dimensionality of the processed data.

It is also an advantage that embodiments of the present invention may be particularly suitable for processing tomographic scanning electron microscopy data.

A device, method and computer program product in accordance with embodiments of the present invention achieves the above objective.

In a first aspect, the present invention relates to a method for retrieving phase information, e.g. phase and amplitude information, from electron diffraction data. The method comprises receiving electron diffraction data produced by scanning a specimen with an electron microscope, e.g. a scanning electron microscope or scanning transmission electron microscope. The electron diffraction data comprises at least four-dimensional data (e.g. 4D, 5D, 6D, ...) composed of a plurality of two-dimensional diffraction images corresponding to different electron beam positions and/or orientations in at least a two-dimensional scanning raster (e.g. scanning over positions on the specimen in two complementary, e.g.

orthogonal, directions, and optionally also varying at least one relative angle between the sample and the direction of beam incidence, i.e. the direction of the optical axis, e.g. for tomographic purposes).

The method comprises providing a proper subset of the electron diffraction data and/or image features determined from said subset to a trained machine learning model and obtaining, as output, at least one image indicative of an outgoing electron wave phase at a reference point and/or a partial object image, indicative of an outgoing electron wave phase, of a local neighborhood around said reference point. The subset comprises or consists of the diffraction patterns from the received data that correspond to at least three of said electron beam positions including said reference point and at least two neighboring beam positions thereof in the scanning raster. Optionally, the neighbors may also include neighboring positions with respect to the angle (or angles) of beam incidence, e.g. such that also (e.g. local) tomographic information is included in the input (e.g. implicitly, e.g. in raw form). Optionally, the neighbors include neighbors in position coordinates, but not in orientation (angle) coordinates, e.g. such that the output is representative of a single tomographic projection, which can be processed further (after repeating for different projections) into a tomographic image. Optionally, the neighbors include neighbors in position coordinates, and substantially all angular data, e.g. such that the subset is local in position, but global over orientations. Thus, the output may directly perform a tomographic reconstruction, e.g. if the model is trained to do so, that represents a local neighborhood in position coordinates around the reference, but extends over the full reconstruction depth.

The method comprises repeating, for different subsets, the step of providing the subset of the electron diffraction data to the trained machine learning model to obtain said output for different reference points of said scanning raster (e.g. the point referring to a 2D position in the scanning raster over the specimen, or referring to a more general "point" that may also include angular coordinates, e.g. for tomographic purposes).

In a method in accordance with embodiments of the present invention, said subset may consist of the diffraction patterns corresponding to a local neighborhood of the reference point in the coordinate space of the scanning raster.

In a method in accordance with embodiments of the present invention, the local neighborhood may be an N by M, e.g. an N by N, contiguous block of scanning raster positions, in which N and M are in the range of 2 to 32. Alternatively, a differently shaped neighborhood may be used that falls within such block, e.g. a diamond-shaped, a cross-shaped, a circular or similar, preferably symmetric, neighborhood falling within such block. The reference point may be located at a central or substantially central position in the local neighborhood.

A method in accordance with embodiments of the present invention may comprise determining a partial object image of a local neighborhood around said reference point based on the output of said trained machine learning model. The repetition may also comprise repeating the step of determining the partial object image from the output of the trained machine learning model for the different reference points of the scanning raster.

In a method in accordance with embodiments of the present invention, determining the partial object image may comprise applying a Fourier transform or equivalent thereof to the output of said model to obtain an image of the outgoing wave in real space and element-wise dividing said image of the outgoing wave by a predetermined input wave image to obtain the partial object image.

In a method in accordance with embodiments of the present invention, determining the partial object image may comprise weighting the partial object image by the amplitude of the predetermined input wave image to attenuate errors in pixels that correspond to a low beam intensity.

In a method in accordance with embodiments of the present invention, said repeated step or steps for different reference points of said scanning raster may be performed when the subset to be provided to the trained machine learning model is available but before the receiving of the entire set of electron diffraction data has completed.

A method in accordance with embodiments of the present invention may comprise providing an object image by combining the plurality of partial object images obtained by said repeated step or steps.

In a method in accordance with embodiments of the present invention, providing said object image may comprise updating the object image by combining the plurality of partial object images obtained thus far in each repetition.

A method in accordance with embodiments of the present invention may comprise displaying the updated object image, e.g. in each loop of the repetition over raster positions (reference points), to a user, e.g. such that the progress of the image acquisition procedure can be monitored and potential problems can be detected early on.

In a method in accordance with embodiments of the present invention, the trained machine learning model may be adapted to provide, as output, at least one image indicative of the phase of the outgoing electron wave at the reference point and an image indicative of the amplitude of the outgoing electron wave at the reference point.

In a method in accordance with embodiments of the present invention, the image indicative of the phase may comprise a first image representative of the cosine of said phase and a second image representative of the sine of said phase.

In a method in accordance with embodiments of the present invention, the trained machine learning model may be an artificial neural network, e.g. a convolutional neural network.

In a method in accordance with embodiments of the present invention, receiving of the electron diffraction data may comprise acquiring the electron diffraction data by controlling the scanning transmission electron microscope to scan said scanning raster and receiving the electron diffraction pattern images from a detector.

A method in accordance with embodiments of the present invention may comprise preprocessing the subset before being provided as input to said model, in which the preprocessing comprises a normalization and/or a range compression, e.g. a range compression by raising the intensity values being preprocessed to a predetermined power b, with b in the range of 0.01 to 0.5.

In a second aspect, the present invention relates to a device for retrieving phase information from electron diffraction data. The device comprises an input for receiving electron diffraction data produced by scanning a specimen with an electron microscope, e.g. a scanning electron microscope or a scanning transmission electron microscope. The electron diffraction data comprises at least four-dimensional data (e.g. 4D, 5D, ...) composed of a plurality of two-dimensional diffraction images corresponding to different electron beam positions and/or orientations in an at least two-dimensional (e.g. 2D, 3D, ...) scanning raster (raster referring to a 2D position grid, but possibly also including a further coordinate or coordinates corresponding to orientation angle or angles). The device also comprises a processor for providing a proper subset of the electron diffraction data and/or image features determined from the subset to a trained machine learning model and obtaining, as output therefrom, at least one image indicative of an outgoing electron wave phase, e.g. images indicative of the outgoing electron wave phase and amplitude, at a reference point and/or a partial object image, indicative of an outgoing electron wave phase, of a local neighborhood around the reference point. The subset comprises or consists of the diffraction patterns from the received data that correspond to at least three of said electron beam positions including the reference point and at least two neighboring beam positions thereof in the scanning raster. The processor is further adapted for repeating, for different subsets, the step of providing the subset of the electron diffraction data to the trained machine learning model to obtain said output of the trained machine learning model for different reference points of said scanning raster.

A device in accordance with embodiments of the present invention may also comprise the electron microscope, e.g. a scanning electron microscope or a scanning transmission electron microscope. The electron microscope may comprise a suitable electron detector, e.g. a direct electron detector or other suitable camera or detector array system.

In a third aspect, the present invention relates to a computer program product for, when executed by a processor or computer, performing the method in accordance with embodiments of the present invention.

While the present invention is described primarily in the context of electron diffraction data, it will be understood that the same principles may be applied to different data modalities. Therefore, in further aspects, the present invention also relates to a method, a device and/or a computer-program product for retrieving phase information, e.g. phase and amplitude information, from radiation observation data indicative of radiation, e.g. electrons, photons (e.g. X-rays, visual spectrum light, infrared light, ultraviolet light, radiofrequency radiation, etc.) or other particles (e.g. protons, ...), passing through, scattered by or otherwise interacting with a sample. The radiation may be at least partially coherent such as to allow the formation of diffraction patterns or detecting similar wavelike (e.g. interference) interactions. In other words, the diffraction image may refer to a more generic wave interaction image representative of the interaction between the radiation and the specimen under study. The radiation observation data may be obtained by a detector array or camera system suitable for directly or indirectly forming a 2D (image) representation of the distribution of the radiation incident on the detector.

The method comprises receiving the data produced by scanning a specimen, e.g. directing the radiation wave at different positions of the specimen. The data comprises at least four-dimensional data composed of a plurality of two-dimensional wave interaction images corresponding to different radiation beam positions (and possibly also orientations) in a two-dimensional (or higher dimensional) scanning raster. The method comprises providing a proper subset of the data and/or image features determined therefrom to a trained machine learning model and obtaining, as output, at least one image indicative of an outgoing wave phase (and optionally also amplitude) at a reference point and/or a partial object image, indicative of an outgoing electron wave phase, of a local neighborhood around said reference point. The subset comprises or consists of the detector images from the received data that correspond to at least three of said beam positions including said reference point and at least two neighboring beam positions thereof in the scanning raster. The method comprises repeating, for different subsets, the step of providing the subset of the data to the trained machine learning model to obtain said output for different reference points of said scanning raster. Other embodiments of such method will be clear on the basis of what is described herein for a method to process electron diffraction data, with the difference that a different data modality is provided as input and processed accordingly. The same applies to a device or computer-program product as described herein.

The independent and dependent claims describe specific and preferred features of the invention. Features of the dependent claims can be combined with features of the independent claims and with features of other dependent claims as deemed appropriate, and not necessarily only as explicitly stated in the claims.

## Short description of the drawings

FIG 1 shows an illustrative method in accordance with embodiments of the present invention.

FIG 2 illustrates a convergent beam image formation process in an electron microscope, in accordance with embodiments of the present invention.

FIG 3 shows a four-dimensional dataset as used in accordance with embodiments of the present invention.

FIG 4 shows an illustrative subset of diffraction images as used in accordance with embodiments of the present invention.

FIG 5 shows an image of the phase of an outgoing electron wave around a reference point, as recovered by a machine learning model in accordance with embodiments of the present invention.

FIG 6 shows an image of the amplitude of the outgoing electron wave around the reference point, as recovered by a machine learning model in accordance with embodiments of the present invention.

FIG 7 shows an image of the outgoing electron wave around the reference point, transformed into real space coordinates, in accordance with embodiments of the present invention.

FIG 8 shows an illustrative architecture of a machine learning model, in the form of a convolutional neural network, as used in accordance with embodiments of the present invention.

FIG 9 illustrates an electrostatic potential of a phase object, computed as a starting point to produce one or more input samples for training a machine learning model in accordance with embodiments of the present invention.

FIG 10 shows a feature vector (i.e. an input data structure for use as model training input) constructed from the electrostatic potential, for use as input in training the machine learning model.

FIG 11 and FIG 12 respectively illustrate amplitude and phase components of a label vector used in training the machine learning model.

FIG 13 shows unnatural sharp transitions in a phase image, constrained in a $2\pi$ range, for illustrating embodiments of the present invention.

FIG 14 and FIG 15 show sine and cosine components of a phase image, for illustrating embodiments of the present invention.

FIG 16 illustrates a weighting process to reduce errors, in accordance with embodiments of the present invention.

FIG 17 illustrates phase object reconstruction results of an experiment comparing a method in accordance with embodiments of the present invention to prior-art methods.

FIG 18 shows a reconstructed image in a graphene microscopic imaging experiment demonstrating embodiments of the present invention.

FIG 19 shows a reconstructed image in an SrTiO₃ microscopic imaging experiment demonstrating embodiments of the present invention.

FIG 20 shows schematically an illustrative device in accordance with embodiments of the present invention.

The drawings are schematic and not limiting. Elements in the drawings are not necessarily represented on scale. The present invention is not necessarily limited to the specific embodiments of the present invention as shown in the drawings.

**Detailed description**

Notwithstanding the exemplary embodiments described hereinbelow, is the present invention only limited by the attached claims. The attached claims are hereby explicitly incorporated in this detailed description, in which each claim, and each combination of claims as allowed for by the dependency structure defined by the claims, forms a separate embodiment of the present invention.

The word "comprise," as used in the claims, is not limited to the features, elements or steps as described thereafter, and does not exclude additional features, elements or steps. This therefore specifies the presence of the mentioned features without excluding a further presence or addition of one or more features.

In this detailed description, various specific details are presented. Embodiments of the present invention can be carried out without these specific details. Furthermore, well-known features, elements and/or steps are not necessarily described in detail for the sake of clarity and conciseness of the present disclosure.

In a first aspect, the present invention relates to a method for retrieving phase information from electron diffraction data.

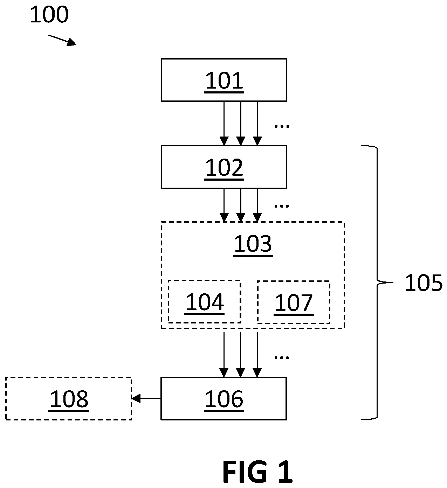

Referring to FIG 1, an illustrative method 100 in accordance with embodiments of the present invention is shown.

The method 100 comprises receiving 101 electron diffraction data $I(r_x, r_y, k_x, k_y)$, produced by scanning a sample under study by an electron beam of an electron microscope, e.g. a scanning electron microscope, e.g. a scanning transmission electron microscope. The electron diffraction data comprises at least four-dimensional data (e.g. 4D, 5D, 6D, ...), in which a two-dimensional diffraction pattern, corresponding to the reciprocal space coordinate indices $k_x, k_y$, is collected for a plurality of different electron beam positions and/or relative orientations between the specimen and the direction of the beam, e.g. corresponding to the sample space coordinates $r_x, r_y$. The data thus may comprise $R_x \times R_y \times K_x \times K_y$ observed (e.g. beam intensity) values, i.e. in which $K_x$ × $K_y$ refers to the individual diffraction image size and $R_x \times R_y$ corresponds to the number of sampled beam positions. Specifically, each individual diffraction image may comprise, or consist of, a scattering or convergent beam electron diffraction (CBED) pattern, collected at a beam position on the sample corresponding to the physical equivalent of the indexed position $r_x, r_y$. Furthermore, not only different positions may be sampled in a scanning raster, but also relative orientations of the beam with respect to the specimen may be varied, e.g. such as to obtain tomographic data. Thus, the data may comprise $R_\varphi \times R_x \times R_y \times K_x \times K_y$ or $R_\varphi \times R_\theta \times R_x \times R_y \times K_x \times K_y$ observed values, in which the angle $\varphi$ or the angles $\varphi, \theta$ refer to the relative orientation angle(s) between the sample and the beam, and the number $R_\varphi$ or numbers $R_\varphi, R_\theta$ to the number of sampled angles (around one or two different rotation axes).

Receiving 101 the electron diffraction data may comprise acquiring the electron diffraction data by controlling the scanning transmission electron microscope and receiving the data from a detector thereof, e.g. from a direct electron detector of the electron microscopy system while accordingly controlled. In other words, receiving the electron diffraction data may comprise imaging the sample using the scanning transmission electron microscope, for example in accordance with a known method for acquiring scattering or convergent beam electron diffraction (CBED)-patterns for the plurality $R_x \times R_y$ of beam positions that are scanned, e.g. which may be distributed in a (e.g. regular) raster pattern over the sample.

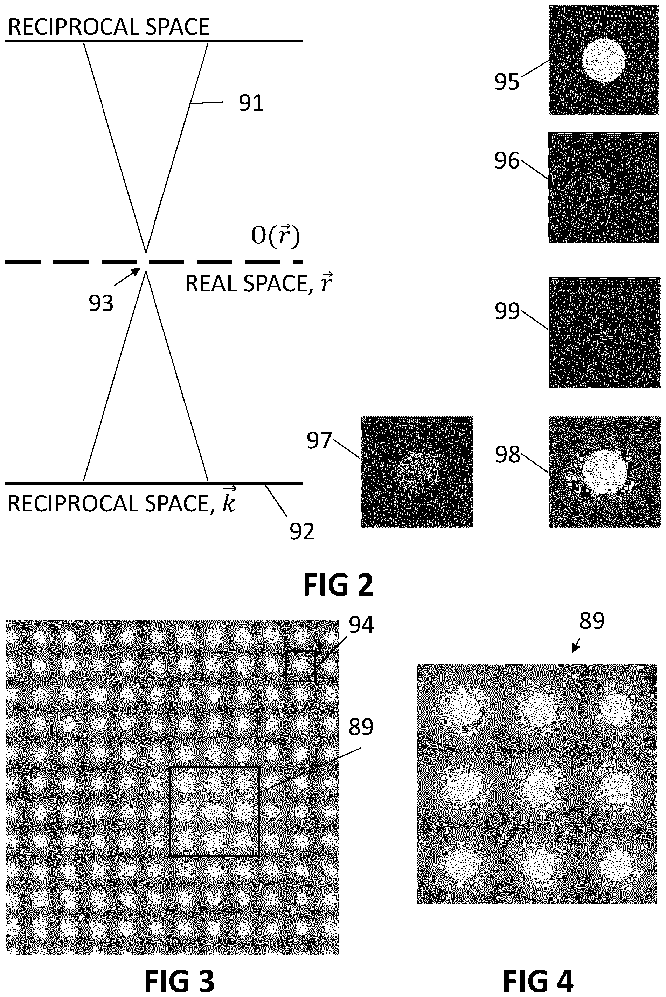

A typical convergent beam image formation process is illustrated in FIG 2. An electron beam 91 is emitted from an electron source, to propagate through the sample under study (the object O) and then observed by an electron detector 92. The aim of such electron microscopy imaging process is generally to reconstruct image information in the object plane, in real space coordinates $\vec{r}$. However, the image observed by the detector is a representation in reciprocal space $\vec{k}$, and is comprised of observable intensity values, which only represent the magnitude of the complex-valued wave in the detector plane.

In an electron microscope, electrons are emitted to interact with the atoms that compose the sample and the electric field they establish. Neglecting excitation events, which reduce the coherency of the beam, the interaction can be seen as adding a phase shift to the coherent electron wave. If a thin sample is assumed, such that the electron wave propagation can be omitted, the interaction between the object and the electron beam can be described by the phase object approximation $O(\vec{r}) \times \Psi_{in}(\vec{r}) = \Psi_{out}(\vec{r})$. From this equation it can be seen that if the electron waves before and after the interaction with the object, $\Psi_{in}(\vec{r})$ and $\Psi_{out}(\vec{r})$, are perfectly known, the object, i.e. the projected electrostatic potential or phase distribution of the object $O(\vec{r})$, is easily resolved. Unfortunately, neither wave function can be directly measured in the microscope. However, the incident beam $\Psi_{in}(\vec{r})$ can be determined, or at least estimated under generic assumptions, from its projection to the reciprocal space $\Psi_{in}(\vec{k})$, since the latter is measurable, by a Fourier transformation.

The input wave $\Psi_{in}$, produced by the electron source (which may include, for purposes of the present disclosure, various elements for focusing, collimation, etc., to condition the wave to be suitable for the imaging experiment, as known in the art), can typically be characterized with high fidelity, e.g. is known from device characteristics, parameters and/or calibration, in both reciprocal space $Y_{in}(\vec{k})$ and real space $\Psi_{in}(\vec{r})$, cf. the illustrative images 95 and 96 respectively. Although the phase of the electron wave is lost when the input wave intensity is recorded, e.g. in a calibration, a homogeneous phase distribution can be assumed inside the beam (at least if the microscope is equipped with a probe corrector).

The recorded detector image 97 is, however, an image of the magnitude of the output wave in reciprocal space, $|\Psi_{out}(\vec{k})|^2$, that is furthermore polluted by Poisson noise and, being composed of actual measurements, only an approximation (e.g. quantized, e.g. digitized) of the physical quantity. After the scattering (object interaction) process, the phase and amplitude of the far field waveform $\Psi_{out}(\vec{r})$ no longer have a simple form, and thus a more involved retrieval process is needed, whereas the situation is considerably less complex for the input wave.

If, from this noisy observed image, the underlying phase and amplitude of the output wave can be recovered, e.g. as components of the output wave 98, $\Psi_{out}(\vec{k})$, in reciprocal space, the output wave 99, $\Psi_{out}(\vec{r})$, in real space can also be easily determined, e.g. by a Fourier transform or other suitable transformation to change from spatial frequency domain to direct spatial domain. Then, the desired image information to characterize the object is retrievable from knowledge of both the input and exit waves, i.e. in accordance with the properties of the interaction with the object, e.g. $O(\vec{r}) \times \Psi_{in}(\vec{r}) = \Psi_{out}(\vec{r})$. As discussed further hereinbelow in detail, the model that is applied may estimate the output wave in reciprocal space and rely on a Fourier transform or equivalent thereof to obtain the output wave properties in real space, or the model may be adapted to estimate the output wave directly in real space coordinates.

Scanning the beam position 93 over the object plane, and collecting the 2D detector output image of measured intensity values at each position of the scanning raster, creates a 4D dataset as illustrated in FIG 3. Even though this dataset is essentially four-dimensional, it is represented by a mosaic of abutting diffraction images 94 in FIG 3, for convenience. It is noted that this concept can be easily extended to include also the sampling of the scanning raster for different angles between the beam and the imaged object (e.g. for tomographic reconstruction), such that the 4D dataset becomes a 5D (or 6D for two different rotation axes) dataset. While reference is made to tomographic reconstruction, it is noted that, for purposes of the present disclosure, this may also include tomosynthetic reconstruction, e.g. in which only over a limited range of angles is scanned, such that (some) depth information can be recovered, but without necessarily achieving the same (or a high) resolution in the depth dimension and/or with some other acceptable limitations.

Referring again to FIG 1, the method 100 comprises providing 102 a proper subset (i.e. less than the entire set, e.g. typically substantially smaller than the entire set, e.g. less than 10%, less than 5%, less than 1% or less than 0.1% of the dataset, without necessarily being limited to these examples) of the electron diffraction data, or image features derived therefrom, to a trained machine learning model (adapted to receive such input) and obtaining, as output from the trained machine learning model, at least one image indicative of the outgoing electron wave phase at (or around) a reference point (sampling raster beam position) $r_{x'},r_{y'}$, e.g. estimating a phase image that corresponds to the diffraction image $I(r_x = r_{x'}, r_y = r_{y'}, k_x, k_y)$ of the reference point, and/or a partial object image, e.g. in real coordinate space $r_x, r_y$, of a local neighborhood around the reference point $r_{x'}, r_{y'}$. The subset comprises, or consists of, the diffraction patterns $I(r_x, r_y, k_x, k_y)$ (e.g. each pattern comprising observed values over $k_x = 1,...,K_x$ and $k_y = 1,...,K_y$, for a beam position $r_x, r_y$) that correspond to at least three different beam positions $r_x, r_y$. Thus, each diffraction pattern may consist of the observed image values $I(r_x, r_y, k_x, k_y)$ over $k_x = 1,...,K_x$ and $k_y = 1,...,K_y$, for a beam position $r_x, r_y$. The at least three beam positions include the (e.g. central) reference point $r_{x'}, r_{y'}$ and at least two neighboring beam positions, in the scanned beam position raster, of the reference point $r_{x'}, r_{y'}$.

As mentioned, the input data to the model may be (or may comprise) the raw image data of this subset, and/or may comprise image features determined from said subset, e.g. obtained by feature detection algorithms as known in the art and/or by a trivial transformation of the raw data (e.g. normalization, scaling, centering, filtering and/or similar image conditioning operations).

The subset of (e.g. raw) image data may be preprocessed before using as input for the model, e.g. centered and normalized by subtracting its mean and dividing by its standard deviation. Additionally, e.g. before centering and normalization (or thereafter), the intensity range (or already preprocessed intensity range) may be compressed, e.g. by raising the values to a small power, e.g. a power in the range of 0.01 to 0.5, e.g. in the range of 0.05 to 0.25, e.g. 0.1.

In accordance with embodiments of the present invention, this subset may be formed by the diffraction patterns corresponding to a local neighborhood (in the real space $\vec{r}$) of the reference point. The local neighborhood may be an approximation of a circular neighborhood (taking discretization into account, e.g. based on an Euclidean metric), a square neighborhood (e.g. corresponding to an infinity metric), a diamond-shaped neighborhood (e.g. corresponding to a Manhattan metric), or another suitable type of neighborhood.

The subset may comprise, or consist of, the diffraction image for at least one neighboring point of the reference point, e.g. a nearest neighbor, in a first scanning direction (e.g. corresponding to the index $r_x$) and the diffraction image for at least one neighboring point of the reference point in a second (different, e.g. orthogonal to the first direction) scanning direction (e.g. corresponding to the index $r_y$), in addition to the diffraction image for the reference point $r_{x'},r_{y'}$ itself.

The subset may comprise at least two neighboring points in both spatial directions, e.g. at least the nearest neighbor on either side of the reference position for both directions.

Furthermore, if the dataset comprises more than 4 dimensions, e.g. is also sampled over different angles (e.g. for tomographic reconstruction), the subset may also be extended to include neighboring positions in the angular sampling dimension(s). For example, the reference point may correspond to a reference point in sampling space position and orientation, and the dataset may include neighboring points of this reference in sampling (translative) position as well as sampling orientation (and/or combinations thereof). For example a reference point $r_{x'},r_{y'},r_{\theta'}$ may be combined, to form the subset, with its neighbors $r_{x'-1},r_{y'},r_{\theta'}$; $r_{x'+1},r_{y'},r_{\theta'}$; $r_{x'},r_{y'-1},r_{\theta'}$; $r_{x'},r_{y'+1},r_{\theta'}$; $r_{x'},r_{y'},r_{\theta'-1}$; $r_{x'},r_{y'},r_{\theta'+1}$, but also with diagonal neighbors, such as $r_{x'+1},r_{y'-1},r_{\theta'}$ and $r_{x'+1},r_{y'+1},r_{\theta'-1}$, to only list a few examples, as well as neighbors that are more than one sampling point removed in one or more coordinates, e.g. $r_{x'},r_{y'+2},r_{\theta'-1}$ and $r_{x'},r_{y'},r_{\theta'+2}$ (to only give a few examples). This can also be extended to a second rotation axis, in which an extra angle $\varphi$ coordinate can be varied in the local neighborhood subset.

Thus, the subset may form a neighborhood of the reference point in sampling point position coordinates and/or sampling angle(s) coordinates. However, it is noted that it may not be necessary to include the sampling angle coordinates, even if a tomographic (or tomosynthetic) reconstruction is intended. For example, the data for each angle of relative orientation between the beam and the sample can be considered as a separate 4D set in sampling raster position $(r_x,r_y)$ and collected diffraction image coordinates $(k_x,k_y)$ for this fixed angle(s) $(\theta$ or $\theta,\varphi)$. The method in accordance with embodiments can thus be used to construct an image of the object (as discussed further hereinbelow) for this fixed angle(s), and a further step of tomographic reconstruction can be used to combine the 2D images of the object for different angles into a 3D image. However, if the local neighborhood (said subset) is configured to include also local neighbors in angular space, a partial object image may be constructed directly in 3D, and the partial 3D object images may be combined to form a (full-scale) 3D object image. If the trained machine learning model directly performs a tomographic or tomosynthetic reconstruction, the input subset may also include substantially all sampled angles for a local (translative) position neighborhood around the reference point, e.g. such that the full depth information intended to be obtained can be reconstructed by the model, but only in a constrained local neighborhood (in position) around the reference point.

When, for the sake of simplicity, only 4D data is considered (2 sampling raster coordinates and 2 diffraction image coordinates), examples of the local neighborhood subset may include a contiguous block of $N \times M$ beam positions that comprises the reference position, preferable at or near a central position therein. The block size components may be, for example, a 2x2 block, a 3x3 block, a 4x4, etc. The dimensions $N$ and $M$ may be equal, but this is not necessarily the case. Each block size dimension $N,M$ may be an integer in the range of 2 to 32 (not excluding larger sizes, even though small values may be preferred to maintain the locality of the neighborhood and for reasons of efficiency; this size may also be tuned by taking the resolution of the scanning raster $R_x,R_y$ into account, i.e. a higher resolution may, possibly, justify a larger local neighborhood), e.g. in the range of 3 to 16, e.g. in the range of 3 to 8, e.g. 3, 4 or 5. The block size dimensions, e.g. each block size dimension $N,M$, may be, preferably, an odd number, e.g. such that the block can be symmetric around the reference position.

Thus, the subset of data provided as input to the trained machine learning model may comprise or consist of $I(r_x,r_y,k_x,k_y)$, for $k_x=1,...,K_x$, $k_y=1,...,K_y$, $r_x=r_{x'}-(N-1)/2,...,r_{x'},r_{x'}+(N-1)/2$ and $r_y=r_{y'}-(M-1)/2,...,r_{y'},r_{y'}+(M-1)/2$, for the example of an (odd-sized) $N \times M$ (or $N \times N$) block centered around the reference position. This example of a symmetric block as local neighborhood does not, however, exclude other shapes of a local neighborhood selection in accordance with embodiments of the present invention.

Reference is made to FIG 4, showing an illustrative subset 89 of 3x3 diffraction images, taken from the collected dataset, or from part of the dataset that has been collected while the acquisition is still running.

Optionally, the input to the model may be derived from the subset of data, e.g. by determining a suitable image feature vector or other values that are determined from the subset in a straightforward manner. A combination of raw diffraction images and derived features or other quantities are also not necessarily excluded in embodiments of the present invention.

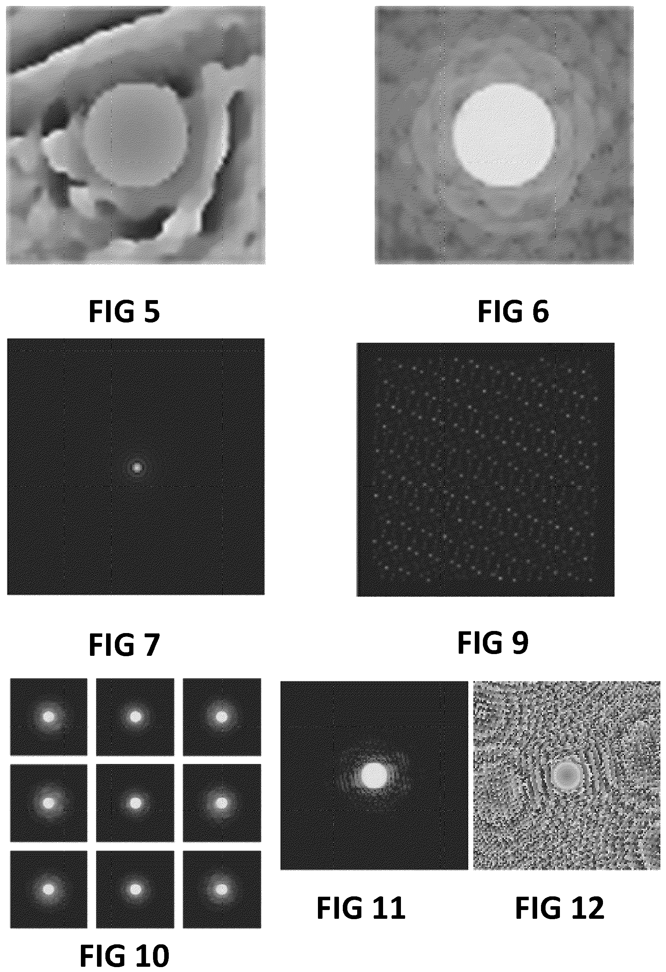

The method 100 thus applies the trained machine learning model to the subset of data, e.g. to the illustrative block 89 of 3x3 diffraction images centered around the reference point $r_{x'},r_{y'}$, e.g. such as to obtain at least one image, see e.g. FIG 5, indicative of the outgoing electron wave phase at the reference point $r_{x'},r_{y'}$.

Additionally, the output may also comprise at least one image, see e.g. FIG 6, indicative of the outgoing electron wave amplitude at the reference point $r_{x'},r_{y'}$, e.g. likewise estimating an amplitude image that corresponds to the diffraction image for the reference position. It is an advantage that both phase and amplitude can be estimated simultaneously, e.g. which can provide consistency in an efficient manner, and reduces or removes noise that is present in the diffraction image used to obtain part of the input to the model. Thus, the output wave $\Psi_{out}(\vec{k})$ can be fully characterized in the reciprocal space by the combination of phase and amplitude information for the corresponding reference point, e.g. as

$\Psi_{out,r'_x r'_y}(k_x, k_y)$ with dimension $K_x, K_y$ (without necessarily being limited to equal input and output resolution).

In accordance with embodiments of the present invention, the output may comprise two (e.g. real-valued) phase images, e.g. a sine and cosine component of the phase (or equivalently, the phase image may be considered as a complex-valued image). Thus, the output of the model may comprise or consist of three real-valued images, e.g. each of size $K_x, K_y$ (even though a change in image resolution between input and output is not necessarily excluded), that correspond to the sine component of the phase, the cosine component of the phase and the amplitude.

It is again noted that, if tomographic data is collected, the output image(s) may also refer to 3D images of a local neighborhood around the reference point. Alternatively, the output image(s) may refer to 2D images of a local neighborhood around the reference point, even if the dataset is in essence tomographic raw data, and a further step may be included to perform a tomographic reconstruction from the 2D images obtained for separate angles.

The method may also comprise determining 103 a partial object image, i.e. in real space $\vec{r}$, based on the output of the trained machine learning model.

Determining 103 the partial object image may comprise applying 104 a (inverse) Fourier transform, or equivalent thereof, e.g. a discrete Fourier transform, e.g. a Fast Fourier Transform (FFT), to obtain an image of (complex-valued) exit wave at the reference point $r_{x'}, r_{y'}$

e.g. thus obtaining the exit wave $\Psi_{out,r'_x r'_y}(r_x, r_y)$ at the reference point ( $r'_x, r'_y$ ), i.e. in a local spatial neighborhood thereof (e.g. corresponding to the dimensions of the exit wave image used as input for the FFT, e.g. forming a spatial image block of $K_x$ by $K_y$). For example, form the phase and amplitude information in FIG 5 and FIG 6, an image of the exit wave around the reference point can be obtained in real space coordinates, cf. FIG 7. However, the partial object image may also be determined directly in real space by evaluating the model, e.g. without requiring a Fourier transform or similar transformation. For example, the model may be trained to estimate its output in reciprocal space (to be transformed subsequently) or in real space (or a combination thereof, and not excluding the possibility of estimation in a different, less commonly used, space, such as a wavelet or other scale-space representation).

Determining 103 the partial object image may comprise providing the partial object image, i.e. in real space $\vec{r}$, based on the image of the exit wave, also in real space, e.g. as determined by the Fourier transform, at/-around the reference point. Generally, methods as known in the art can be used to produce such object image. The partial (e.g. local) object image may represent a neighborhood around the reference point in real space, e.g. an image block of $K_x$ by $K_y$ pixels, or even an image block of $K_x$ by $K_y$ by $K_z$ voxels (in case of tomographic/tomosynthetic reconstruction).

For example, the local outgoing wave image $\Psi_{out,r'_x r'_y}(r_x, r_y)$ can be divided by a predetermined input wave, e.g. using $\frac{\Psi_{out}}{\Psi_{in}} = O(r_x, r_y)$ , thereby obtaining a local object image $O_{r'_x r'_y}(r_x, r_y)$ of the reconstructed object around the reference point $r_{x'}, r_{y'}$. The predetermined input wave (or a discretized image approximation thereof, e.g. in the same coordinate space and/or with same dimensions as the output wave image) may be typically known from device parameters and/or calibration, and/or can be easily determined in accordance with methods known in the art. The element-wise division may be replaced by a suitable equivalent thereof to avoid error propagation, e.g. due to magnification of errors. For example, a suitable regularization method may be used to control the error, a logarithmic transform may be used, and/or another numeric (propagation) error-reducing method as known in the art may be applied.

Determining 103 the partial object image may furthermore comprise a normalization 107, e.g. by weighting with the incident beam amplitude (or this may implicitly be done by taking the beam intensity into account in the representation of the predetermined input wave, or the exit wave obtained by the FFT or equivalent thereof may be normalized instead). According to the equation $\frac{\Psi_{out}}{\Psi_{in}} = O(r_x, r_y)$ , the outgoing electron wave should contain a full description of the phase object. However, considering that object regions receiving a weak signal (low input intensity) bear very little information, the object image may be weighted by the amplitude (or the magnitude, or another quantity that has a high degree of correlation with the amplitude or magnitude) of the input electron wave $\Psi_{in}(r_x, r_y)$, which represents the confidence that the predicted phase values in reciprocal space are indeed reliable. This results in a weighted patch of the phase object at the scan point (reference point), which can be repeated, as discussed below, for different scan points.

Therefore, the partial object image, thus obtained 103, may form a small patch around the sampling point $r'$ that is reconstructed using data collected at the raster sampling point $r'$ supplemented with data collected from neighboring beam positions in the scanning raster. By summing these partial object images together, i.e. the (e.g. weighted) partial images obtained for a plurality of subsets with different reference points, the object image of a larger area, e.g. substantially the entire raster scan area, can be reconstructed.

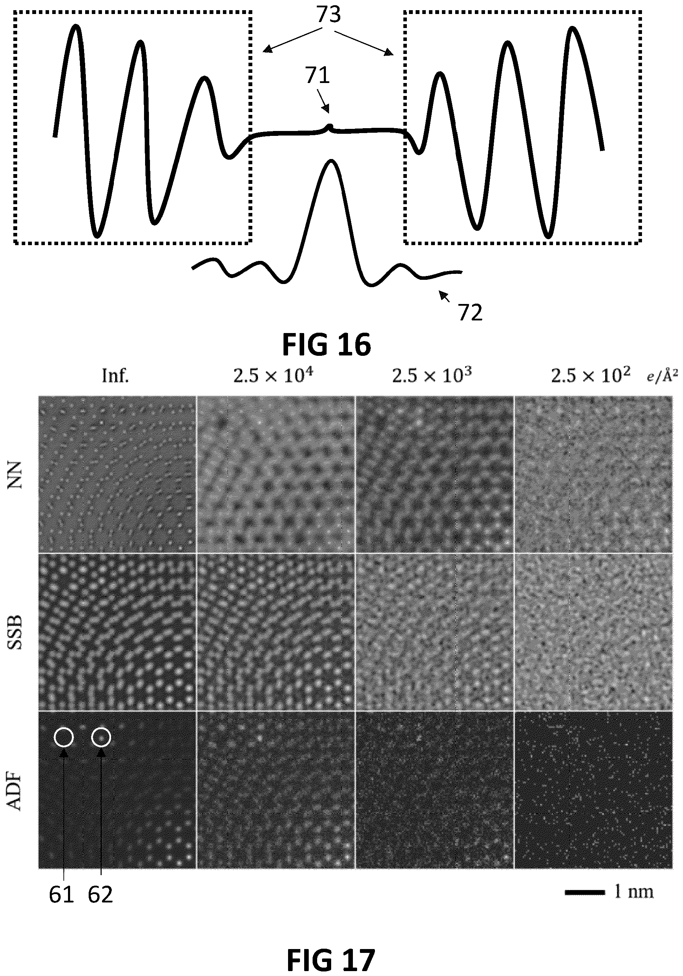

The effect of the weighting step 107, discussed hereinabove, is shown in FIG 16. A profile through the partial object image (phase image patch) is depicted. Near the center, an atom-scaled feature 71 is present in the image. However, due to a low amplitude of the incident electron wave 72 toward the edges of the field, the information in the image patch can be very noisy in its peripheral regions 73. Weighting the data accordingly reduces this noise and allows the relevant information (e.g. the atom-scaled feature 71) to clearly emerge in the resulting weighted image.

The method 100 applies the trained machine learning model to the subset of data, e.g. to a 3x3 (for example) block of diffraction images around the reference point $r_{x'},r_{y'}$, such as to obtain the image(s) indicative of the outgoing electron wave phase, and optionally amplitude, at the reference point $r_{x'},r_{y'}$. While hereinabove it is assumed that the trained machine learning model provides the phase/amplitude images in reciprocal space, it will be clear to the skilled person that the trained machine learning model may alternatively estimate the outgoing wave function image (e.g. complex components thereof) directly in real space, such that a Fourier transformation step is not strictly required. Likewise, the model may take additional input(s) representative of the input wave (and/or its characteristics) to directly render the partial object image (with or without normalization) as output, or the model may be specifically trained for a predetermined input wave function, such that it can produce the partial object image without requiring such further inputs. While the separation of concerns, and the stability and efficiency of prior art methods of reconstructing the object image from estimated phase and amplitude exit wave information, may point to a preference for estimating the exit wave phase and amplitude in the reciprocal domain and using established methods to produce the (partial) object image therefrom, it is clear that embodiments of the present invention may estimate the exit wave or even the object image in real space directly, e.g. to reduce the complexity of the algorithm, for efficiency gains (even though the overhead is likely minimal, if any) or simply for the sake of using this equivalent approach.

In other words, the step of determining 103 the partial object image may be integrated in the step of providing 102 the subset of the electron diffraction data to the trained machine learning model to obtain as output at least one partial object image around the reference point $r_{x'},r_{y'}$.

The method further comprises repeating 105, for different subsets and their corresponding reference point (in $r_x,r_y$ space, or optionally further extended to also include sampled orientation angles for tomography), the step of providing 102 the subset of the electron diffraction data to the trained machine learning model to obtain the image(s) indicative of the exit electron wave phase (and optionally also amplitude) for the reference point of each subset and/or the partial object image, e.g. in real coordinate space $r_x,r_y$, of a local neighborhood around each reference point.

Likewise, the step of determining 103 the partial object image, i.e. in real space $\vec{r}$, based on the output of the trained machine learning model, e.g. from phase and amplitude images in reciprocal space, may be repeated for each subset, e.g. to determine a partial object image around each reference point of the subsets on the basis of the output of the model for that subset.

Advantageously, in said repetition 105, each of the subsets (for corresponding reference points), the step 102 can be performed, in a method in accordance with embodiments, before the step of receiving 101 the electron diffraction data $I(r_x,r_y,k_x,k_y)$ (optionally further extended in dimensions for tomographic data collection) has been completed. Therefore, in said repetition 105, the step of providing 102 one of the subsets (e.g. each subset) of the electron diffraction data to the trained machine learning model may be executed before the step of receiving 101 has completed but when (e.g. after) the subset has been received. The subset in each repetition may be constructed in a similar or substantially the same manner, yet differing in the reference point around which a local neighborhood (the subset) is formed.

The method 100 may also comprise, e.g. in said repetition loop 105, providing 106 an object image by combining the plurality of partial object images obtained by said repeated 105 step or steps. Thus providing 106 the object image may comprise updating an object image by combining the partial object images that have been obtained thus far in said repetition loop. In other words, the determined partial object images $O_{r_{x'}' r_{y'}'}(r_x, r_y)$ (e.g. either directly from the evaluations 102 of the machine learning model or determined 103 from the output of these model evaluations) may be filled in, by a pixel-wise addition at the correct location (the patch region around the corresponding reference point), in a full-scaled object image $O_{full}(r_x,r_y)$ (the dimension of which may correspond to the scanning raster, e.g. $R_x$ by $R_y$), e.g. filling in each partial image in the full-scaled image once the partial object image becomes available.

It will be understood that the size of the output image may differ. For example, for some reference beam positions of the scanning raster, the required neighbors may not be collected to form the corresponding subset, e.g. along one or more edges of the raster field. Alternatively, the missing neighbors along one or more edges of the raster may be filled in with dummy values, e.g. zeroed out, or another approach may be used to infer the missing data (e.g. repeating the data of the first/last available row/column, mirroring this data, etc.).

Thus, this reconstruction process can be run already during the experiment, and the real-time reconstructed image (e.g. updated with new information in each loop of the repetition) therefore can help to validate appropriate settings and conditions of the microscope. Thus, the chance of collecting unusable data can be reduced, e.g. which may be substantial risk in low-dose experiments.

Therefore, the method may also comprise displaying 108 the updated object image, e.g. in each loop of the repetition over raster positions (reference points), to a user such that the progress of the image acquisition procedure can be monitored and potential problems can be detected early on. In other words, live updates of the object image can be monitored while the image acquisition is running, e.g. to allow a user to correct problems early on.

The trained machine learning model may be a (artificial) neural network, e.g. a convolutional neural network. The neural network may be adapted (trained and designed) to solve the phase retrieval problem, e.g. to solve the phase and amplitude retrieval problem, in a method to reconstruct an (spatial) image of the observed object. The neural network may also, e.g. alternatively, be adapted to estimate the partial object image directly as output.

Various known techniques for neural network based machine (deep) learning may be suitable, such as deep neural networks, deep belief networks, tensorial neural networks, convolutional neural networks, recurrent neural networks, residual neural networks, generative adversarial networks and recursive neural networks, deep Boltzmann machines, and/or combinations thereof, among a wide range of less common flavors.

Even though deep learning neural networks have shown to produce good results, other machine/-deep learning models are not necessarily excluded, e.g. in so far it can handle the same types of input and output, and preferably provides a similar flexibility in training without being (too) sensitive to overtraining. Examples may include autoencoders, support or tensor vector machines, and Markov random fields and other graph-based methods.

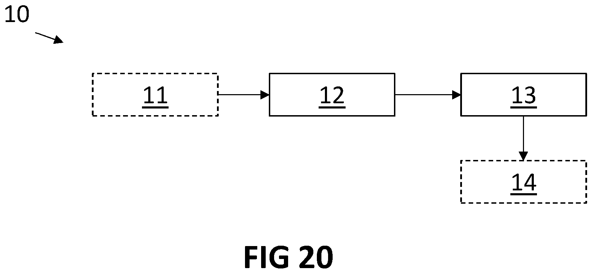

In a second aspect, the present invention relates to a device for retrieving phase information (e.g. phase and amplitude information) from electron diffraction data. FIG 20 shows schematically an illustrative device 10 in accordance with embodiments of the present invention.

The device comprises an input 12 for receiving electron diffraction data produced by scanning a specimen with an electron microscope, e.g. a scanning electron microscope or a scanning transmission electron microscope, in which the electron diffraction data comprises four-dimensional data composed of a plurality of two-dimensional diffraction images corresponding to different electron beam positions in a two-dimensional scanning raster.

The device may also comprise the electron microscope 11. Differently worded, an aspect of the present invention relates to an electron microscopy system comprising a device in accordance with embodiments of the present invention. The electron microscope may comprise a direct electron detector array, or another suitable detector array or camera system to collect the (electron image) data.

The device comprises a processor 13 for providing a proper subset of the electron diffraction data and/or image features determined from the subset to a trained machine learning model and obtaining, as output, at least one image indicative of an outgoing electron wave phase at a reference point and/or a partial object image of a local neighborhood around the reference point, in which the subset comprises or consists of the diffraction patterns from said received data that correspond to at least three of said electron beam positions including said reference point and at least two neighboring beam positions thereof in the scanning raster.

In other words, the processor 13 may be adapted to select the proper subset from the received input data and evaluating the trained machine learning model to obtain its output.

The processor 13 is also adapted for repeating, for different subsets, the step of providing the subset of the electron diffraction data to the trained machine learning model to obtain said output of the trained machine learning model for different reference points of said scanning raster.

The device may also comprise an output 14 for outputting an object image of the specimen that is constructed, by the processor, from the outputs of the trained machine learning model obtained for the different reference points, e.g. by combining partial object images, e.g. as abutting patches (without limitation thereto, e.g. the patches may overlap and be combined by a suitable operation, e.g. addition or averaging).

The output 14 may, for example, comprise a display device for displaying the object image, a storage device for storing the object image, a network or other data communication interface for transmitting the object image and/or other means for providing the object image to a user or external device. The output may be part of a user interface system, e.g. comprising a keyboard, a mouse, a touch screen, a display monitor, a printer, or any other known user interface components as generally known.

The device may comprise or consist of a computer system, e.g. programmed to perform the described operations by a processor or combination of processors thereof, a cluster of connected computers, a distributed system, e.g. using a server-client infrastructure, and/or the like, as generally known. The processor may be a general-purpose central processing unit, a combination of a plurality of such CPU's, a graphical processing unit (GPU) (or plurality thereof), and/or the like, as generally known. The device and/or processor may also consist of or comprise a hardware-configurable processor, such as a field-programmable gate array (FPGA), and/or an electronic circuit specifically designed for performing said tasks, e.g. an application-specific integrated circuit (ASIC). The device and/or processor may comprise any combination of the means described hereinabove, and is not limited thereto.

Other features, or details of the features described hereinabove, of a device in accordance with embodiments of the present invention shall be clear in view of the description provided hereinabove relating to a method in accordance with embodiments of the present invention. For example, the processor may be adapted for executing any, or any combination, of steps of a method in accordance with embodiments.

In a third aspect, the present invention relates to a computer program product for, when executed by a processor or computer, performing a method in accordance with embodiments of the present invention.

Features, or details of the features, of a computer program product in accordance with embodiments of the present invention shall be clear in view of the description provided hereinabove relating to a method and/or device in accordance with embodiments of the present invention.

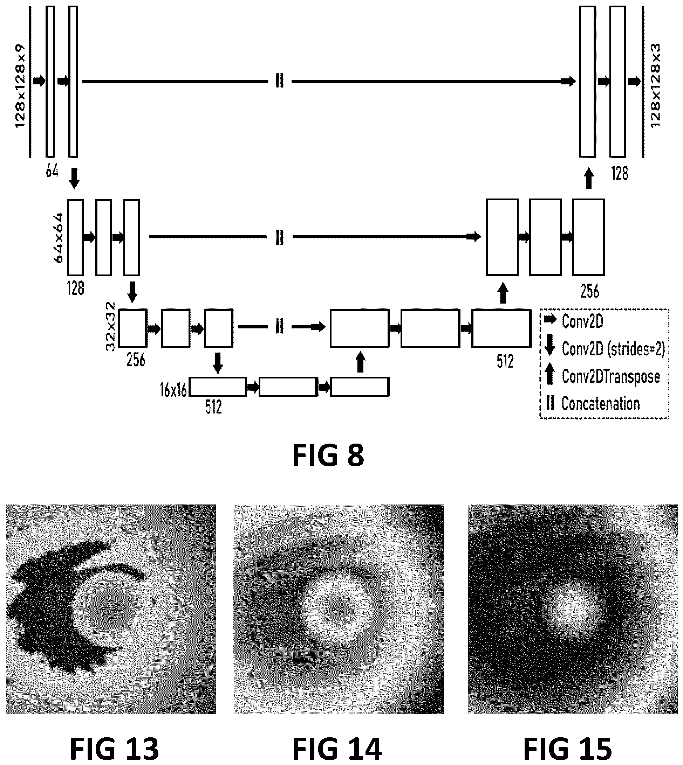

An illustrative architecture of the machine learning model, in the form of a neural network based on U-NET, is shown in FIG 8. Reference is made to Ronneberger et al, "U-net: Convolutional networks for biomedical image segmentation," in Medical Image Computing and Computer-Assisted Intervention - MICCAI 2015, Lecture Notes in Computer Science, vol 9351. (https://doi.org/10.1007/978-3-319-24574-4_28).

However, it will be understood by the skilled person that, given the flexibility of such machine learning techniques, different architecture may be used to obtain the same or similar results. Nonetheless, the depicted architecture has been shown to perform efficiently and accurately. It is also to be noted that the indicated dimensions are merely illustrative, and embodiments are not limited to specific choices of input diffraction image sizes (in this example 128x128), and neighborhood sizes (in this example 3x3, represented by 9). This also applies to the output. For example, a different resolution of the output could be produced if so desired, including higher resolutions. In this example, the output consists of 3 images of size 128x128, corresponding to the phase sine, the phase cosine and the amplitude, however different approaches (different types and numbers of output images) are not excluded, as has been discussed hereinabove. It will also be understood that for different input and/or output dimensions, the dimensions of the intermediate layers may need to be adjusted as well, and, optionally, additional (or fewer) layers may be included in the model to obtain optimal results. For example, if the input and output image dimensions are increased to 256x256, an additional 128x128 layer may be introduced (without limitation thereto) to follow the same step-wise pyramid pattern as shown.

Some notable differences with the U-NET architecture were however used, as discussed hereinbelow. The input is a stack of nine diffraction patterns of size 128x128 pixels. As already mentioned, these illustrative sizes are not limitative, and a method in accordance with embodiments can easily be adapted to different sizes of input, e.g. different neighborhood sizes, individual pattern image sizes and/or intermediate layer sizes. Training weights may be used for different sizes as they were trained for, may be retrained for different sizes, or an interpolation layer may be used to transform an arbitrary input size to the input size that the model was specifically designed for.

CBED patterns naturally exhibit a large difference between the bright-field and the dark-field regions. To exploit the valuable contribution of dark-field scattered electrons, the input tensors intensity range is compressed by raising it to the power of 0.1 (for example), prior to standardizing each input tensor by subtracting its mean and dividing by its standard deviation. Due to the small input size of the diffraction patterns in the spatial dimensions, this illustrative implementation of the U-Net is only three levels deep (without embodiments being limited thereto; as opposed to the four-level implementation as known from the reference hereinabove), to arrive at a map size of 16 by 16 pixels at the lowest level. To avoid loss of information in the downsampling steps, convolutional layers with strides of two are substituted for pooling layers, thus making the neural network fully convolutional. All convolutional layers use padding to maintain their map sizes. Furthermore, leaky rectified linear units are used as activation functions, introducing a small slope on the negative part of the classical ReLU function.

The output has three layers: the retrieved exit-wave amplitude and two layers representing the sine and cosine components of the wave phase. The phase decomposition at the output avoids the necessity to estimate unnatural edges in the phase at the transitions between $\pi$ and $-\pi$ as shown in the depiction of the wave phase in FIG 13, cf. the sine and cosine components in FIG 14. Such edge artefacts in the phase have been shown to hamper convergence and degrade the reconstruction results. The outputs of these two layers are constrained by a scaled hyperbolic tangent function, forcing the output into a range between $\pm\pi$. Subsequently, their respective trigonometric functions are applied: $f_1(x) = \sin(\tanh(x) * \pi)$ and $f_2(x) = \cos(\tanh(x) * \pi)$.

However, alternative approaches are conceivable. For example, the phase image may be used instead of the sine and cosine components (thus accepting the consequence of potentially less robust convergence), or the phase image may not be limited to the $2\pi$ domain, e.g. by extending the range to more than a single period to avoid unnatural (sharp) transitions near the limits of the period. The latter may require extensive preprocessing, which can be weighed against the potential benefit of reducing the output vector size of the model. The output for the amplitude is simply linear. The Adam optimizer (see e.g. Kingma et al, "Adam: A Method for Stochastic Optimization," published conference paper of the 3rd International Conference for Learning Representations, San Diego, 2015, https://arxiv.org/abs/1412.6980) is used to minimize the sum of the pixel-wise $\mathcal{L}_1$ losses and patch-wise structure dissimilarity-losses on the phase and amplitude images. The Euclidean norm of the decomposed phase tensor was furthermore penalized, as it is preferably one for an accurate recombination.

In an illustrative example of training a model for use in embodiments of the present invention, training data to train the machine learning model (the depicted illustrative neural network architecture of FIG 8) were obtained from "The Materials Project," an Open Database available at https://materialsproject.org. This data contains structure files of crystals, which records atom species, coordinates, symmetry and various other information. Presently, the available data in this project includes over 126 000 atomic structures (the number of suitable structures may vary, e.g. depending on the acceptable level of tolerance for asymmetry and/or other selection criteria), which covers a very wide range of potential crystal structures. Advantageously, new crystals can be added to this database, e.g. by coordinated updates of the database or from additional data sources.

It will be noted that a similar approach can be used for other types of data, e.g. amorphous materials, biological samples, etc., and is not necessarily limited to crystalline structures. It may be advantageous to train a model specifically to the type of material intended to be analyzed, e.g. to improve the strength and robustness of the model, e.g. to crystalline structures, to biological samples, or even to subclasses of such categories. However, models that are simultaneously trained on different types of samples are not necessarily excluded.

From this database, random samples were constructed, in which specimen orientations, position, thickness and microscope parameters (not necessarily limited thereto) were varied. For each such sample, the electrostatic potential is computed to determine the phase object, e.g. as shown in FIG 9.

Thus, a multi-slice simulation for CBED generation can be used to construct an input (feature) vector for training the model, e.g. a local neighborhood of diffraction images around a reference position commensurate with the subset used in application of the model, as shown in FIG 10.

Data augmentation techniques may be used to add further variation to the input data used for training the model. For example, data samples may be constructed to comprise noise, e.g. Poisson noise, and/or other typically undesirable effects of the imaging process. By adding artificial noise to the feature data, overfitting of the model can be reduced or avoided.

To train the model, the ground truth phase object is also used to construct the desired output (label) vector of amplitude and phase images for the region of the reference point, e.g. resp. FIG 11 and FIG 12.

For this example, the MULTEM multi-slice simulation software package, which implements a multi-slice algorithm with microscope modelling, was used to generate the electron wave function after interaction with the material with tunable parameters including energy, convergence angle, bright field proportion, scan density, etc. These (or some of the) parameters may be fixed to train the model for a specific parameter selection in use, or may be varied to create additional samples, e.g. to create a more widely applicable trained model. Reference is made to Lobato et al., "MULTEM: A new multislice program to perform accurate and fast electron diffraction and imaging simulations using Graphics Processing Units with CUDA," Ultramicroscopy, vol. 156, no. 2015, pp. 9-17, for additional background information about the MULTEM package. The software package is thus used to provide a forward model for computing electron probes for given microscope settings, the interaction with the electrostatic potential of atoms and the resulting exit waves and diffraction pattern intensities. For computational efficiency, a relatively simplistic model was used, which neglects the effects of spatial and temporal incoherence and inelastic scattering. However, this can easily be extended without exercising an inventive effort.

From the perfect wave function generated by MULTEM, the feature vector is created, in this example, by adding Poisson noise to the data. Again parameter(s) of the added noise may be varied over different samples in the training data set to realize a trained model that is robust to different levels of noise pollution (e.g. at different doses). The feature vector can be directly determined from the MULTEM wave function, e.g. to represent the ideal output that is desired.

Each training sample therefore consisted, in this example, of the 3x3 kernel of adjacent diffraction patterns as feature, e.g. FIG 10, and an exit wave (amplitude-phase pair) as label, e.g. FIG 11 and FIG 12, in 128x128 pixels.

In this example, the training dataset comprised about 320 000 different samples, i.e. feature and label vectors for training the model. The simulation parameters and microscope settings were drawn at random from a uniform distribution within the limits of practically meaningful ranges. As already mentioned, the atomic specimens for the simulations are generated from randomly drawn crystallographic data files from the Materials project. The crystallographic orientation parallel to the electron beam propagation is drawn from the set of all low-index zone-axis orientations, while its rotation around the beam vector is random. The selected specimen thicknesses range between 2 Å and 5 Å, e.g. strictly obeying the limits of the phase object approximation.

The effect of a finite electron dose is modelled from the diffraction patterns assuming Poisson distributions of the electron counts on the detector pixels. The dose is applied as a factor scaling the simulated pattern and thus shifting the expected values of the Poisson distributions accordingly. This step is applied as a data augmentation step during the training, resulting in a different dose and dose realization for each training sample in each epoch.

The combination of an appropriate forward model, a vast amount of structures, continuous microscope parameter ranges and an effective way of data augmentation enables the creation of very large datasets without redundancy and thus provides the means to train a neural network to solve the given problem in a very general manner at little risk of overfitting.

As an example to demonstrate the potential performance of embodiments of the present invention, the neural network model, as designed and trained per the examples hereinabove, was tested on simulated 4D STEM datasets. The material that is used in this example is twisted bi-layer graphene, in which a vacancy was intentionally created and one of the carbon atoms was substituted for a silicon atom. The simulation is performed under a convergent beam condition, with a convergence angle of 25 mrad, a beam energy of 200 kV, and a scanning step size of 0.2 Å. Poisson noise is added to the simulated test datasets to model the effect of a finite electron dose. The reconstruction is performed with a method in accordance with embodiments of the present invention (in line with the illustrative network architecture and training data generation discussed hereinabove) and, for comparison, with both a ptychography method and conventional ADF imaging. The selected prior-art ptychography method for reference is a single-side band (SSB) ptychography reconstruction algorithm, and is compared with conventional ADF imaging, as described in Rodenburg et al, "Experimental tests on double-resolution coherent imaging via stem," Ultramicroscopy, vol. 48, no. 3, pp. 304 - 314.

The results in FIG 17 show the results of this experiment, for various doses, in which NN refers to the method in accordance with embodiments of the present invention, SSB to the prior-art ptychography method and ADF to the prior-art ADF method. The reconstruction in accordance with embodiments clearly performs well, even in the presence of the introduced defects. Both the substitutional atom 62 and the vacancy 61 can be clearly identified in the mid to high dose reconstructed images. The reconstruction in accordance with embodiments of the present invention also shows a superior ability to suppress noise at low doses.

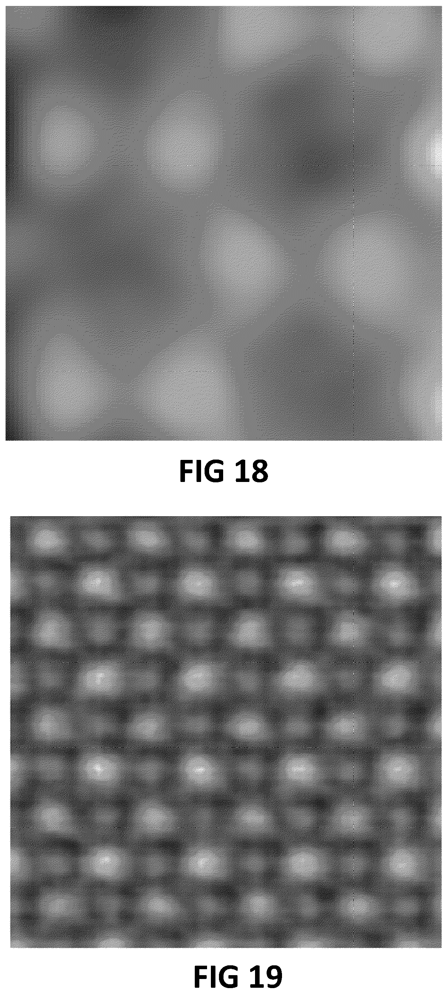

A further illustrative example tests the method in accordance with embodiments on a real graphene dataset, i.e. an acquired dataset as opposed to simulated data. For the CBED acquisition, a convergence angle of 34 mrad, an acceleration voltage of 60 keV, and a scanning step size of 0.04 Å was used. The corresponding reconstruction image obtained by a method in accordance with embodiments of the present invention is shown in FIG 18.

Referring to the result shown in FIG 19, the method in accordance with embodiments was also applied to a $SrTiO_3$ dataset, which was acquired with 20 mrad convergence angle, 200 keV, and step size of 0.191 Å. Strictly speaking, this specimen is not a phase object due to its thickness, which indeed leads to unwanted artefacts since the reconstruction should, ideally, take this into account. However, the result shows that by rescaling the intensity of the dataset, the method in accordance with embodiments still manages to generate a clear image that not only shows the position of the atoms, but also relative differences in the phase. However, due to poor adherence to the POA assumption, the phase difference between the atoms and spacing does not match with the correct value calculated from the transmission function of the specimen. Regardless, the method in accordance with embodiments can be optimized to improve performance for thicker samples, and, as presented, clearly remains useful for qualitative visualization and/or for monitoring the acquisition even if a more involved reconstruction of the data is intended after collecting the dataset.

## Claims

1. A computer-implemented method (100) for retrieving phase information from electron diffraction data, the method comprising:

   - receiving (101) electron diffraction data produced by scanning a specimen with an electron microscope, wherein said electron diffraction data comprises at least four-dimensional data composed of a plurality of two-dimensional diffraction images corresponding to different electron beam positions and/or orientations in at least a two-dimensional scanning raster, **characterised by** the steps of
   - providing (102) a proper subset of said electron diffraction data and/or image features determined from said subset to a trained machine learning model and obtaining, as output, at least one image indicative of an outgoing electron wave phase at a reference point and/or a partial object image, indicative of an outgoing electron wave phase, of a local neighborhood around said reference point, wherein said subset comprises or consists of the diffraction patterns from said received data that correspond to at least three of said electron beam positions including said reference point and at least two neighboring beam positions thereof in the scanning raster, and
   - repeating (105), for different subsets, the step of providing (102) the subset of the electron diffraction data to the trained machine learning model to obtain said output for different reference points of said scanning raster.

2. The method of claim 1, wherein said trained machine learning model is adapted to provide, as output, at least one image indicative of the phase of the outgoing electron wave at the reference point and at least one image indicative of the amplitude of the outgoing electron wave at the reference point.

3. The method of claim 1 or claim 2, wherein said subset comprises or consists of the diffraction patterns corresponding to a local neighborhood of the reference point in the coordinate space of the scanning raster.

4. The method of any of the previous claims, comprising determining (103) a partial object image of a local neighborhood around said reference point based on the output of said trained machine learning model, in which said repetition (105) also comprises repeating the step of determining (103) the partial object image from the output of the trained machine learning model for said different reference points of the scanning raster.

5. The method of claim 4, wherein determining (103) the partial object image comprises weighting (107) the partial object image by the amplitude of the predetermined input wave image to attenuate errors in pixels that correspond to a low beam intensity.

6. The method of any of the previous claims, in which said repeated (105) step or steps for different reference points of said scanning raster are performed when the subset to be provided to the trained machine learning model is available but before the receiving (101) of the entire set of electron diffraction data has completed.

7. The method of any of the previous claims, comprising providing (106) an object image by combining the plurality of partial object images obtained by said repeated (105) step or steps.

8. The method of claim 6 in combination with claim 7, wherein providing (106) said object image comprises updating the object image by combining the plurality of partial object images obtained thus far in each repetition (105).

9. The method of any of the previous claims, wherein said at least one image indicative of the phase comprise a first image representative of the cosine of said phase and a second image representative of the sine of said phase.

10. The method of any of the previous claims, wherein said trained machine learning model is an artificial neural network.

11. The method of any of the previous claims, wherein said receiving (101) of the electron diffraction data comprises acquiring the electron diffraction data by controlling the electron microscope to scan said scanning raster and receiving the electron diffraction pattern images from a detector.

12. The method of any of the previous claims, comprising preprocessing said subset before being provided as input to said model, said preprocessing comprising a normalization and/or a range compression by raising the intensity values being preprocessed to a predetermined power b, with b in the range of 0.01 to 0.5.

13. A device (10) for retrieving phase information from electron diffraction data, the device comprising:

- an input (12) for receiving electron diffraction data produced by scanning a specimen with an electron microscope, wherein the electron diffraction data comprises at least four-dimensional data composed of a plurality of two-dimensional diffraction images corresponding to different electron beam positions and/or orientations in an at least two-dimensional scanning raster, and **characterised by**
- a processor (13) for providing a proper subset of the electron diffraction data and/or image features determined from the subset to a trained machine learning model and obtaining, as output therefrom, at least one image indicative of an outgoing electron wave phase at a reference point and/or a partial object image, indicative of an outgoing electron wave phase, of a local neighborhood around the reference point, wherein said subset comprises or consists of the diffraction patterns from said received data that correspond to at least three of said electron beam positions including said reference point and at least two neighboring beam positions thereof in the scanning raster, wherein said processor is further adapted for repeating, for different subsets, the step of providing the subset of the electron diffraction data to the trained machine learning model to obtain said output of the trained machine learning model for different reference points of said scanning raster.

14. The device of claim 13, comprising said electron microscope (11).

15. A computer program product for, when executed by a processor or computer, performing the method in accordance with any of the claims 1 to 12.

**Patentansprüche**

1. Computerimplementiertes Verfahren (100) zum Abrufen von Phaseninformationen aus Elektronenbeugungsdaten, wobei das Verfahren Folgendes umfasst:

   - das Empfangen (101) von Elektronenbeugungsdaten, die durch Abtasten einer Probe mit einem Elektronenmikroskop erzielt werden; wobei die oben genannten Elektronenbeugungsdaten mindestens vierdimensionale Daten umfassen, die aus einer Anzahl zweidimensionaler Beugungsbilder bestehen, die verschiedenen Positionen und/oder Orientierungen des Elektronenstrahls in mindestens einem zweidimensionalen Abtastraster entsprechen; **gekennzeichnet durch** die folgenden Schritte:

   - das Anbringen (102) einer geeigneten Untergruppe der oben genannten Elektronenbeugungsdaten und/oder Bildmerkmale, die aus der oben genannten Untergruppe bestimmt werden, einem trainierten Modell des maschinellen Lernens, und das Erzielen, als Ausgabe, mindestens eines Bildes, das eine ausgehende Elektronenwellenphase an einem Referenzpunkt und/oder eines Teilobjektbildes, das eine ausgehende Elektronenwellenphase einer lokalen Nähe um den oben genannten Referenzpunkt, anzeigt; wobei die oben genannte Untergruppe, die aus den oben genannten empfangenen Daten abgeleiteten Beugungsmuster umfasst oder aus diesen besteht, die mindestens drei der oben genannten Elektronenstrahlpositionen, die das oben genannte Referenzpunkt und mindestens zwei seiner benachbarten Strahlpositionen in dem Abtastraster umfassen, entsprechen; und
   - das Wiederholen (105), für verschiedene Untergruppen, des Schritts (102), in dem die Untergruppe von Elektronenbeugungsdaten an das trainierte maschinelle Lernmodell angebracht wird, um die oben genannte Ausgabe für verschiedene Referenzpunkte des oben genannten Abtastrasters zu erzielen.

2. Verfahren nach Anspruch 1, wobei das oben genannte trainierte Modell des maschinellen Lernens so ausgebildet ist, dass es als Ausgabe mindestens ein Bild liefert, das die Phase der ausgehenden Elektronenwelle an dem Referenzpunkt anzeigt, und mindestens ein Bild, das die Amplitude der ausgehenden Elektronenwelle an dem Referenzpunkt anzeigt.

3. Verfahren nach Anspruch 1 oder 2, wobei die oben genannte Untergruppe die Beugungsmuster umfasst oder aus diesen besteht, die einer lokalen Umgebung des Referenzpunkts im Koordinatenraum des Abtastrasters entsprechen.

4. Verfahren nach einem der vorhergehenden Ansprüche, das das Bestimmen (103) eines partiellen Objektbildes einer lokalen Umgebung um den Referenzpunkt herum umfasst, basierend auf der Ausgabe des trainierten maschinellen Lernmodells; wobei die oben genannte Wiederholung (105) auch das Wiederholen des Schritts des Bestimmens (103) des partiellen Objektbildes aus der Ausgabe des trainierten maschinellen Lernmodells für die oben genannten Referenzpunkte des Abtastrahmens umfasst.

5. Verfahren nach Anspruch 4, wobei das Bestimmen (103) des partiellen Objektbildes das Gewichten (107) des partiellen Objektbildes mit der Amplitude des vorbestimmten Eingangswellenbildes umfasst, um Pixelfehler zu dämpfen, die einer niedrigen Strahlintensität entsprechen.

6. Verfahren nach einem der vorstehenden Ansprüche, wobei der/die oben genannte(n) Schritt/Schritte (105), der/die für verschiedene Referenzpunkte des oben genannten Abtastrasters wiederholt wird/-werden, durchgeführt wird/werden, wenn die Untergruppe, die an das trainierte maschinelle Lernmodell angebracht werden soll, verfügbar ist, jedoch vor Abschluss des Empfangs (101) der gesamten Gruppe von Elektronenbeugungsdaten.

7. Verfahren nach einem der obigen Ansprüche, das das Anbringen (106) eines Objektbildes durch eine Kombination der mehreren Teilobjektbilder umfasst, die durch den/die wiederholten Schritt(e) (105) erzielt wurden.

8. Verfahren nach Anspruch 6 in Kombination mit Anspruch 7, wobei das Anbringen (106) des oben genannten Objektbildes das Aktualisieren des Objektbildes durch eine Kombination der oben genannten mehreren Teilobjektbilder umfasst, die bis dahin in jeder Wiederholung (105) erzielt wurden.

9. Verfahren nach einem der vorhergehenden Ansprüche, wobei das mindestens eine die Phase aufzeigende Bild ein erstes Bild, das den Kosinus der Phase aufzeigt, und ein zweites Bild, das den Sinus der Phase aufzeigt, umfasst.

10. Verfahren nach einem der vorstehenden Ansprüche, wobei das oben genannte trainierte Modell des maschinellen Lernens ein künstliches neuronales Netzwerk darstellt.

**11.** Verfahren nach einem der vorstehenden Ansprüche, wobei das oben genannte Empfangen (101) von Elektronenbeugungsdaten das Erfassen von Elektronenbeugungsdaten umfasst, indem das Elektronenmikroskop angewiesen wird, das oben genannte Raster abzutasten, und indem die Bilder des Elektronenbeugungsmusters von einem Detektor empfangen werden.

**12.** Verfahren nach einem der vorstehenden Ansprüche, das die Vorbehandlung der oben genannten Untergruppe umfasst, bevor sie als Eingang an das oben genannte Modell angebracht wird, wobei die Vorbehandlung eine Normalisierung und/oder eine Komprimierung von Reichweite durch eine Erhöhung der Intensitätswerte umfasst, die einer Vorbehandlung unterzogen werden, bis eine vorgegebene Leistung b erreicht ist, wobei b in dem Bereich von 0,01 bis 0,5 liegt.

**13.** Vorrichtung (10) zum Abrufen von Phaseninformationen aus Elektronenbeugungsdaten, wobei die Vorrichtung Folgendes umfasst:

- einen Eingang (12) zum Empfangen von Elektronenbeugungsdaten, die durch Abtasten einer Probe mit einem Elektronenmikroskop erzielt werden; wobei die Elektronenbeugungsdaten mindestens vierdimensionale Daten umfassen, die aus einer Anzahl zweidimensionaler Beugungsbilder bestehen, die verschiedenen Positionen und/oder Orientierungen des Elektronenstrahls in mindestens einem zweidimensionalen Abtastraster entsprechen; und **gekennzeichnet durch**
- einen Prozessor (13) zum Anbringen einer geeigneten Untergruppe der Elektronenbeugungsdaten und/oder Bildmerkmale, die aus der Untergruppe bestimmt werden, einem trainierten Modell des maschinellen Lernens, und zum Erzielen, als Ausgabe von dem Prozessor, mindestens eines Bildes, das eine ausgehende Elektronenwellenphase an einem Referenzpunkt anzeigt, und/oder eines Teilobjektbildes, das eine ausgehende Elektronenwellenphase einer lokalen Nähe um den Referenzpunkt anzeigt;

wobei die oben genannte Untergruppe, die aus den oben genannten empfangenen Daten abgeleiteten Beugungsmuster umfasst oder daraus besteht, die mindestens drei der oben genannten Elektronenstrahlpositionen entsprechen, die das oben genannte Referenzpunkt und mindestens zwei seiner in dem Abtastraster benachbarten Strahlpositionen umfassen; und wobei der Prozessor ferner dafür ausgelegt ist, für verschiedene Untergruppen den Schritt zu wiederholen, bei dem die Untergruppe von Elektronenbeugungsdaten an das trainierte maschinelle Lernmodell angebracht wird, um die oben genannte Ausgabe des trainierten maschinellen Lernmodells für verschiedene Referenzpunkte des oben genannten Abtastrasters zu erzielen.

**14.** Vorrichtung nach Anspruch 13, die das oben genannte Elektronenmikroskop (11) umfasst.

**15.** Computerprogrammprodukt, das bei Ausführung durch einen Prozessor oder Computer das Verfahren gemäß einem der Ansprüche 1 bis 12 implementiert.

**Revendications**

**1.** Procédé mis en œuvre par ordinateur (100) destiné à récupérer des informations de phase à partir de données de diffraction d'électrons, dans lequel le procédé comprend le fait de :

- recevoir (101) des données de diffraction d'électrons que l'on obtient par l'intermédiaire d'un balayage d'un échantillon avec un microscope électronique ; dans lequel lesdites données de diffraction d'électrons comprennent au moins des données en quatre dimensions qui se composent d'un certain nombre d'images de diffraction en deux dimensions, qui correspondent à différentes positions et/ou orientations du faisceau électronique dans au moins une trame de balayage en deux dimensions ; **caractérisé par** les étapes au cours desquelles :

- on procure (102) un sous-groupe approprié desdites données de diffraction d'électrons et/ou desdites caractéristiques d'image, que l'on détermine à partir dudit sous-groupe, à un modèle exercé d'apprentissage automatique, et on obtient, à titre de sortie, au moins une image révélatrice d'une phase d'onde électronique sortante à un point de référence et/ou une image d'objet partielle, révélatrice d'une phase d'onde électronique sortante, d'une proximité locale autour dudit point de référence ; dans lequel ledit sous-groupe comprend ou est constitué par les diagrammes de diffraction issus desdites données reçues qui correspondent à au moins trois positions parmi lesdites positions du faisceau électronique, qui englobent le point de référence et au moins deux de ses positions de faisceau voisines dans la trame de balayage ; et

- on répète (105), pour différents sous-groupes, l'étape (102) au cours de laquelle on procure le sous-groupe de données de diffraction d'électrons au modèle exercé d'apprentissage automatique afin d'obtenir ladite sortie pour différents points de référence de ladite trame de balayage.

2. Procédé selon la revendication 1, dans lequel ledit modèle exercé d'apprentissage automatique est conçu pour procurer, à titre de sortie, au moins une image révélatrice de la phase de l'onde électronique sortante au point de référence et au moins une image révélatrice de l'amplitude de l'onde électronique sortante au point de référence.

3. Procédé selon la revendication 1 ou 2, dans lequel ledit sous-groupe comprend ou est constitué par les diagrammes de diffraction qui correspondent à un voisinage local du point de référence dans l'espace de coordonnées de la trame de balayage.

4. Procédé selon l'une quelconque des revendications précédentes, qui comprend la détermination (103) d'une image d'objet partielle d'un voisinage local autour dudit point de référence, basée sur la sortie dudit modèle exercé d'apprentissage automatique ; dans lequel ladite répétition (105) comprend également la répétition de l'étape de détermination (103) de l'image d'objet partielle à partir de la sortie du modèle exercé d'apprentissage automatique pour lesdits points de référence de la trame de balayage.

5. Procédé selon la revendication 4, dans lequel la détermination (103) de l'image d'objet partielle comprend la pondération (107) de l'image d'objet partielle par l'amplitude de l'image de l'onde d'entrée prédéterminée afin d'atténuer des erreurs de pixels qui correspondent à une faible intensité de faisceau.

6. Procédé selon l'une quelconque des revendications précédentes, dans lequel ladite étape ou lesdites étapes répétée(s) (105) pour différents points de référence de ladite trame de balayage sont mises en œuvre lorsque le sous-groupe qui doit être procuré au modèle exercé d'apprentissage automatique est disponible, mais avant l'achèvement de la réception (101) de l'entièreté du groupe de données de diffraction d'électrons.

7. Procédé selon l'une quelconque des revendications précédentes, qui comprend le fait de procurer (106) une image d'objet en passant par une combinaison desdites plusieurs images d'objet partielles que l'on a obtenues par l'intermédiaire de ladite étape ou desdites étapes répétée(s) (105).

8. Procédé selon la revendication 6 en combinaison avec la revendication 7, dans lequel le fait de procurer (106) ladite image d'objet comprend la mise à jour de l'image d'objet en passant par une combinaison desdites plusieurs images d'objet partielles que l'on a obtenues jusque-là dans chaque répétition (105).

9. Procédé selon l'une quelconque des revendications précédentes, dans lequel ladite au moins une image révélatrice de la phase comprend une première image qui révèle le cosinus de ladite phase et une deuxième image qui révèle le sinus de ladite phase.

10. Procédé selon l'une quelconque des revendications précédentes, dans lequel ledit modèle exercé d'apprentissage automatique représente un réseau neuronal artificiel.

11. Procédé selon l'une quelconque des revendications précédentes, dans lequel ladite réception (101) des données de diffraction des électrons comprend l'acquisition des données de diffraction d'électrons par le fait de donner ordre au microscope électronique de balayer ladite trame de balayage et par le fait de recevoir les images du diagramme de diffraction d'électrons à partir d'un détecteur.

12. Procédé selon l'une quelconque des revendications précédentes, qui comprend le prétraitement dudit sous-groupe avant de le procurer, à titre d'entrée, audit modèle, ledit prétraitement comprenant une normalisation et/ou une compression de portée par l'intermédiaire d'une élévation des valeurs d'intensité qui sont soumises à un prétraitement jusqu'à atteindre une puissance prédéterminée b, dans lequel b se situe dans la plage allant de 0,01 à 0,5.

13. Dispositif (10) destiné à récupérer des informations de phase à partir de données de diffraction d'électrons, dans lequel le dispositif comprend :

   - une entrée (12) destinée à la réception de données de diffraction d'électrons que l'on obtient par l'intermédiaire d'un balayage d'un échantillon avec un microscope électronique ; dans lequel les données de diffraction d'électrons comprennent au moins des données en quatre dimensions qui se composent d'un certain nombre d'images de diffraction en deux dimensions, qui correspondent à différentes positions et/ou orientations du faisceau électronique dans au moins une trame de balayage en deux dimensions ; et **caractérisé par**
   - un processeur (13) destiné à procurer un sous-groupe approprié des données de diffraction d'électrons et/ou des caractéristiques d'image, que l'on détermine à partir du sous-groupe, à un modèle exercé d'apprentissage automatique et à obtenir, à titre de sortie à partir dudit processeur, au moins une image révélatrice d'une phase d'onde électronique sortante à un point de référence, et/ou une image d'objet partielle, révélatrice d'une phase d'onde électronique sortante, d'une proximité locale autour du point de référence ;

dans lequel ledit sous-groupe comprend ou est constitué par les diagrammes de diffraction issus desdites données reçues qui correspondent à au moins trois positions parmi lesdites positions du faisceau électronique, qui comprennent le point de référence et au moins deux de ses positions de faisceau voisines dans la trame de balayage ; et dans lequel ledit processeur est conçu en outre pour répéter, pour différents sous-groupes, l'étape au cours de laquelle on procure le sous-groupe de données de diffraction d'électrons au modèle exercé d'apprentissage automatique afin d'obtenir ladite sortie du modèle exercé d'apprentissage automatique pour différents points de référence de ladite trame de balayage.

14. Dispositif selon la revendication 13, qui comprend ledit microscope électronique (11).

15. Produit de programme informatique destiné à, lorsqu'il est exécuté par un processeur ou un ordinateur, mettre en œuvre le procédé en conformité avec l'une quelconque des revendications 1 à 12.

**FIG 1**

RECIPROCAL SPACE

91

$O(\vec{r})$

REAL SPACE, $\vec{r}$

93

RECIPROCAL SPACE, $\vec{k}$

92

95

96

99

97

98

**FIG 2**

94

89

**FIG 3**

89

**FIG 4**

**FIG 5**

**FIG 6**

**FIG 7**

**FIG 9**

**FIG 10**

**FIG 11**

**FIG 12**

**FIG 8**

**FIG 13**

**FIG 14**

**FIG 15**

**FIG 16**

**FIG 17**

**FIG 18**

**FIG 19**

10

| 11 | → | 12 | → | 13 |
|---|---|---|---|---|

14

**FIG 20**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **EDE et al.** Exit Wavefunction Reconstruction from Single Transmission Electron Micrographs with Deep Learning. *arXiv:2001.10938v2*
- **LAANAIT et al.** Exascale deep learning for scientific inverse problems. *arXiv:1909.11150v1*, https://arxiv. org
- **COA MICHAEL et al.** Machine Learning for Phase Retrieval from 4D-STEM Data. *Microscopy and Microanalysis*, 01 August 2020, vol. 26 (S2), ISSN 1431-9276, 8-9
- **RONNEBERGER et al.** U-net: Convolutional networks for biomedical image segmentation. *Medical Image Computing and Computer-Assisted Intervention - MICCAI 2015, Lecture Notes in Computer Science*, vol. 9351, https://doi.org/10.1007/978-3-319-24574-4_28
- **KINGMA et al.** Adam: A Method for Stochastic Optimization. *3rd International Conference for Learning Representations, San Diego*, 2015, https://arxiv. org/abs/1412.6980
- *The Materials Project*, https://materialsproject.org
- **LOBATO et al.** MULTEM: A new multislice program to perform accurate and fast electron diffraction and imaging simulations using Graphics Processing Units with CUDA. *Ultramicroscopy*, vol. 156 (2015), 9-17
- **RODENBURG et al.** Experimental tests on double-resolution coherent imaging via stem. *Ultramicroscopy*, vol. 48 (3), 304-314